# EUROPÄISCHE PATENTSCHRIFT

(11) **EP 4 000 463 B1**
(45) Veröffentlichungstag und Bekanntmachung des Hinweises auf die Patenterteilung: **31.05.2023**
(21) Anmeldenummer: 21198408.3
(22) Anmeldetag: 23.09.2021
(51) Int. Cl.: A47B 96/20, B29C 70/18, B29C 70/46, B29C 70/54, B29D 24/00, E04B 2/74, B29C 33/00, B29C 70/86, B29L 31/44

(54) **VERFAHREN ZUR HERSTELLUNG EINES RAUMTEILERS AUS FASERVERBUNDMATTEN, RAUMTEILERSYSTEM SOWIE TISCH**
METHOD FOR MANUFACTURING A SPACE DIVIDER MADE OF FIBRE COMPOSITE MATS, ROOM DIVIDER SYSTEM AND TABLE
PROCÉDÉ DE FABRICATION D'UN DIVISEUR D'ESPACE À PARTIR DE MATS COMPOSITES FIBREUX, SYSTÈME DE DIVISEUR D'ESPACE, AINSI QUE TABLE

(30) Priorität: 28.10.2020 DE 102020213546
(43) Veröffentlichungstag der Anmeldung: 25.05.2022
(73) Patentinhaber: Sedus Stoll AG, 79804 Dogern (DE)
(72) Erfinder: THOMAS, Konstantin, 79725 Laufenburg (DE); MAIER, Klaus, 79875 Dachsberg (DE); ECKERT, Bernhard, 79733 Görwihl (DE)
(74) Vertreter: Isarpatent

(56) Entgegenhaltungen:
- EP-A1- 3 165 348
- US-A1- 2018 030 725

## Beschreibung

### GEBIET DER ERFINDUNG

Die vorliegende Erfindung betrifft ein Verfahren zur Herstellung eines Raumteilers aus Faserverbundmatten. Die vorliegende Erfindung betrifft ferner ein Raumteilersystem mit einem Raumteiler, welcher mit einem derartigen Verfahren hergestellt ist, sowie einen Tisch mit einem solchen Raumteilersystem.

### TECHNISCHER HINTERGRUND

In der Möbelbranche steigt in jüngerer Zeit die Nachfrage nach Produkten auf der Basis von Vlies, Filz und anderen Fasermaterialien. Allgemein kommen vermehrt Faserverbundwerkstoffe mit natürlichen und/oder synthetischen Fasern und geeigneten Bindemitteln zum Einsatz. Vielfach dient hierbei ein Kunststoff als Grundmaterial für die Fasern und/oder das Bindemittel, welcher unter Wärmeeinwirkung fließfähig wird und den Faserverbund damit unter Druck und Temperatur formbar macht. Typische Materialien umfassen insbesondere Polyester wie Polyethylenterephthalat (PET) oder Polylactid (PLA) oder dergleichen.

So beschreibt beispielsweise die Druckschrift DE 30 07 343 A1 ein Verfahren zur Herstellung von Formteilen aus Faservlies, bei welchem Fasern verwendet werden, die zumindest mantelseitig bindungswirksam schmelzbaren Werkstoff aufweisen. Vlies-Teilstücke werden unter Temperatureinwirkung formgepresst. Die Wärmebehandlung führt hierbei dabei dazu, dass Bindungsprozess und Formungsprozess gleichzeitig ablaufen.

Die Druckschrift EP 3 241 462 B1 beschreibt ein Möbel- und/oder Raumteilerstrukturelement mit zumindest einem raumseitigen Flächenelement, welches ganz oder teilweise als überwiegend glattflächiges Formvlies aus Kunststoff ausgebildet ist.

EP3165348 A1 und US2018030725 A1 beschreiben ein Verfahren zur Herstellung eines Raumteilers.

### ZUSAMMENFASSUNG DER ERFINDUNG

Vor diesem Hintergrund liegt der vorliegenden Erfindung die Aufgabe zugrunde, Raumteiler mit flexibler Flächengestaltung in möglichst einfacher Weise herzustellen. Erfindungsgemäß wird diese Aufgabe durch ein Verfahren mit den Merkmalen des Patentanspruchs 1, durch ein Raumteilersystem mit den Merkmalen des Patentanspruchs 12 und durch einen Tisch mit den Merkmalen des Patenanspruchs 15 gelöst. Demgemäß ist vorgesehen:
- Ein Verfahren zur Herstellung eines Raumteilers aus Faserverbundmatten, umfassend Erhitzen zweier Faserverbundmatten auf eine Umformtemperatur, Verpressen der beiden erhitzten Faserverbundmatten miteinander in einem einzelnen Arbeitshub eines Formwerkzeugs zu einem flächigen Formteil entsprechend einer Gestalt des Raumteilers, wobei ein Hohlraum zwischen den beiden Faserverbundmatten ausgeformt wird, indem ein Formkern zwischen die beiden Faserverbundmatten eingelegt wird und nach dem Verpressen wieder herausgezogen wird, und Befestigen eines Montageelements in dem Hohlraum zur Montage des Raumteilers, wobei die Faserverbundmatten jeweils als ein einstückiges flexibles textiles Flächengebilde mit einem Kunststoffbestandteil ausgebildet sind, welcher eine Schmelztemperatur unterhalb der Umformtemperatur aufweist.
- Ein Raumteilersystem mit einem Raumteiler, welcher mit einem erfindungsgemäßen Verfahren hergestellt ist.
- Ein Tisch mit einer Tischplatte und einem erfindungsgemä-βen Raumteilersystem, wobei der Raumteiler als Tischtrennwand ausgebildet und über zumindest ein Montageelement an der Tischplatte montiert ist.

Eine der vorliegenden Erfindung zugrunde liegende Idee besteht darin, einen Raumteiler aus zwei Fasermatten zu fertigen, indem ein Formteil in einem einzelnen Arbeitshub eines Formwerkzeugs, d.h. in nur einem Fertigungsschritt, vollständig aus den Fasermatten geformt wird und dabei gleichzeitig eine Montageöffnung direkt mit eingeformt wird. Dabei werden unter anderem auch Rundungen und Kanten in demselben Verfahrensschritt mit ausgebildet.

Als materielle Grundlage für das Formteil dienen hierbei einteilige Fasermatten mit einem Kunststoffanteil, der mittels Wärmebehandlung in einen verformbaren und/oder fließfähigen Zustand gebracht wird. Vor dem eigentlichen Pressvorgang können die Faserverbundmatten geeignet zugeschnitten werden. Die Erwärmung des Materials kann dann sowohl vor dem eigentlichem Pressvorgang, z.B. durch einen Heißluftstrom in einem Ofen, als auch währenddessen stattfinden, z.B. durch Aufheizung des Formwerkzeugs. Durch das Zusammenspiel des erhitzten Kunststoffanteils und der Druckbeaufschlagung des Pressvorgangs wird ein Vernetzungs-, Verformungs- und/oder Verdichtungsprozess innerhalb der Faserverbundstruktur in Gang gesetzt, bei welchem sich das aufgeschmolzene Kunststoffmaterial zwischen den Fasern verteilt und diese dabei miteinander verklebt. Hierbei wird insbesondere das Material der beiden Faserverbundmatten stoffschlüssig miteinander verbunden. Nach Abkühlung und dadurch bedingter Aushärtung des Kunststoffs bleibt ein ausgehärtetes Faserverbundformteil in der gewünschten Form zurück. Durch entsprechende Formgestaltung des Formwerkzeugs lassen sich praktisch beliebig gekrümmte Raumteiler in einfacher Weise und mit hoher Durchsatzrate herstellen. Überschüssiges Material kann in Nachbearbeitungsschritten entfernt bzw. abgetrennt werden, z.B. mit einer Wasserschneidanlage. Dabei können Kanten, falls gewünscht bzw. erforderlich, sauber entgratet und gebürstet werden, um eine gewünschte Vlieshaptik zu erhalten.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Weiterbildung können die Faserverbundmatten jeweils einen Vliesstoff und/oder einen Filzstoff aufweisen.

Ein Vliesstoff ist ein Gebilde aus Fasern beliebiger Länge, die auf irgendeine Weise zu einer Faserschicht zusammengefügt und miteinander verbunden worden sind. Als flexible textile Flächengebilde sind Vliesstoffe leicht biegsam und weisen eine vergleichsweise geringe Dicke gegenüber ihrer Länge und Breite auf. Ihre Hauptstrukturelemente sind hierbei Fasern, die aus unterschiedlichsten Materialien bestehen können. Vliesstoffe stellen eine Materialgruppe mit einer großen Eigenschaftsvielfalt dar, die durch die Vielzahl von nutzbaren Rohstoffen und Herstellungsvarianten einem breiten Spektrum von Anwendungsanforderungen gezielt angepasst werden kann.

Ein Filzstoff ist ursprünglich ein Faserwerkstoff aus einem Naturprodukt, insbesondere Schurwolle von Schafen. Allerdings ist es ebenso möglich, Filze aus Chemiefasern (Kunststoff) und Pflanzenfasern (z.B. Kokos oder Baumwolle) herzustellen. Filzstoffe werden mitunter basierend auf den verwendeten Fasermaterialien von Vliesstoffen abgegrenzt. Eine weitere häufige Unterscheidung wird darin getroffen, dass Filze nicht nur eine oberflächliche, sondern auch im Inneren eine weitgehende und gleichmäßige Verfestigung des Fasermaterials aufweisen. Eine Unterscheidung kann somit prinzipiell anhand der Dichte und/oder des Verfestigungsmechanismus vorgenommen werden. Jüngere Normen für die Definition von Vliesstoffen sehen jedoch keine explizite Trennung mehr zu den Filzen vor.

Gemäß einer Weiterbildung können die Faserverbundmatten jeweils PET-basierte Fasern umfassen.

Polyethylenterephthalat (PET) ist ein durch Polykondensation hergestellter thermoplastischer Kunststoff aus der Familie der Polyester, d.h. ein glasklarer Kunststoff, der durch Schmelzen unter Luftabschluss zu Synthesefasern versponnen werden kann (Schmelzspinnverfahren). Da Polyester zu 100% recycelbar ist, besteht die Möglichkeit Vliesmöbel aus recyceltem Material herzustellen und diese nach ihrem Lebenszyklus auch wieder dem Recyclingkreislauf zuzuführen.

Gemäß einer Weiterbildung können die Faserverbundmatten jeweils Bikompomonentenfasern umfassen. Die Bikompomonentenfasern können einen Polyesterkern aufweisen, der von einem Polymermantel mit einer Schmelztemperatur unterhalb der Umformtemperatur umgeben ist.

Im Gegensatz zu einer reinen PET-Faser weist eine Bikompomonentenfaser somit lediglich einen Kern aus Polyester auf. PET weist dabei beispielsweise einen Schmelzpunkt zwischen etwa 200°C bis 300°C auf. Der den Kern umschließende Fasermantel kann nun ein Polymer mit einer deutlich niedrigeren Schmelztemperatur aufweisen, z.B. ein niedrig schmelzendes Polymer, welches bereits unter 150°C schmilzt, z.B. 130°C oder weniger. Bei einer entsprechenden Wärmebehandlung einer Faserverbundmatte aus solchen Fasern kann somit lediglich der Mantel der Fasern aufgeschmolzen werden und als Vernetzungsbasis für die Bildung des Formteils dienen. Die Faserkerne können dagegen zumindest weitestgehend ihre feste Struktur behalten und als versteifendes Grundmaterial für das Formteil dienen.

Der Druck, welcher beim Pressen eingesetzt wird, entscheidet über die Dicke und Verdichtung des Formteils. Dabei verschmilzt bzw. verschweißt der niedrigschmelzende Anteil der Bikomponentenfasern mit dem Polyesteranteil der Fasern. Je stärker die Vernetzung der Fasern, desto geringer ist die Vlieshaptik der entstehenden Oberfläche. Gleichzeitig weist diese jedoch eine höhere Stabilität auf. Dabei hängt der Grad der Vernetzung ebenso von dem konkreten Pressvorgang ab. Bei größerer Verdichtung wird eine stärkere Vernetzung erzielt, da sich das aufgeschmolzene Material stärker verteilt.

Es versteht sich hierbei, dass eine verwendete Faserverbundmatte unterschiedliche Fasertypen aufweisen kann, z.B. einen ersten Fasertyp aus einer reinen PET-Faser und einen zweiten Fasertyp aus einem niedrigschmelzen Kunststoff bzw. mit einem Anteil aus einem derartigen Material. Weiterhin kann eine solche Faserverbundmatte einen Kunststoffanteil aufweisen, der nicht in Faserform vorliegt, sondern die Fasern der Matte beispielsweise als Bindematerial bzw. Matrixmaterial umgibt bzw. durchsetzt. Dieser bindende Kunststoffanteil kann beispielsweise in einem vorhergehenden Fertigungsschritt bereits aufgeschmolzen und mit den Fasern der Matte vernetzt worden sein.

Gemäß einer Weiterbildung können die beiden Faserverbundmatten vor dem Verpressen miteinander vernadelt werden.

Speziell Vlies- und Filzstoffe können damit schnell und dennoch präzise aneinander fixiert werden, um die relative Anordnung und Ausrichtung der beiden Faserverbundmatten mit einer gewissen Genauigkeit für den anschließenden Pressvorgang sicherzustellen. Vernadeln bedeutet hierbei, dass ein Teil der Fasern der beiden Matten durch Nadelwalzen so ineinandergeschoben wird, dass diese ineinander verhaken und so einen Verbund der beiden Matten bilden. Derartige Nadelvliese bieten eine außerordentlich hohe Strapazierfähigkeit.

Es versteht sich, dass die beiden Faserverbundmatten grundsätzlich auch anderweitig aneinander befestigt werden können, wenn es für die jeweiligen Umstände vorteilhaft ist. Grundsätzlich kann eine vorherige Befestigung der beiden Faserverbundmatten aneinander in bestimmten Anwendungen jedoch ebenso komplett wegfallen. Prinzipiell kann eine relative Anordnung der beiden Faserverbundmatten auch durch das Formwerkzeug vorgegeben werden.

Gemäß einer Weiterbildung kann ein Dorn als Formkern zur Formung eines zylinderförmigen Hohlraums verwendet werden. Das Montageelement kann ein Stabelement zur Befestigung in dem Hohlraum umfassen.

Beispielsweise kann ein Metallstab in das Formwerkzeug eingespannt werden, der dann vor oder während des Pressvorgangs zwischen die beiden Faserermatten eingeführt wird und nach Aushärtung des Formteils wieder herausgezogen wird. Die beiden Faserverbundmatten werden bei dem Umformprozess gegen den Metallstab gepresst, wodurch ein zylinderförmiger Hohlraum gebildet wird. Ein Stabelement, z.B. ein hohles Rohr, kann anschließend in den Hohlraum eingelegt und/oder eingepresst werden und als Verbindungsstück für weitere Komponenten dienen. Insbesondere kann das Stabelement als Tragstruktur für den Raumteiler an einer Struktur dienen, z.B. an einem Möbelstück wie einem Tisch oder dergleichen.

Die Verbindung zwischen dem Stabelement und dem Formteil bzw. allgemein zwischen dem Montageelement und dem Formteil kann hierbei (wiederholt) lösbar oder unlösbar gestaltet sein. Beispielsweise kann das Montageelement (also insbesondere das Stabelement) in den Hohlraum eingeklebt sein. Ebenso kann ein Kraftschluss und/oder ein Formschluss zwischen dem Montageelement und dem Formteil das Montageelement gegen Herausziehen aus dem Hohlraum sichern.

Gemäß einer Weiterbildung kann das Montageelement einen lösbaren Adapter aufweisen, der eine zugehörige Montageposition des Raumteilers bereitstellt.

Der Adapter kann beispielsweise mit einem in dem Hohlraum befindlichen Stabelement (lösbar) verbunden sein. Beispielsweise kann eine Steckverbindung zwischen dem Stabelement und dem Adapter vorgesehen sein, wobei der Adapter als Stecker ausgebildet sein kann und das Stabelement mit einer komplementär geformten Buchse versehen sein kann.

Gemäß einer Weiterbildung kann der Adapter verstellbar zur Bereitstellung unterschiedlicher Montagepositionen des Raumteilers ausgebildet sein.

Beispielsweise kann der Adapter mit einem Dreh- oder Schraubmechanismus versehen sein, über welchen der Adapter zwischen mehreren diskreten Montageanordnungen verstellt werden kann, die unterschiedlichen Befestigungspositionen und/oder Befestigungsausrichtungen des Raumteilers an einer Struktur, z.B. einem Möbelstück, entsprechen können (z.B. auf einem Tisch im Gegensatz zu neben und/oder vor einem Tisch). Ebenso kann durch den Einbau eines Rohres samt Adapter auch die Möglichkeit einer zweiten Befestigungsebene ermöglicht werden, z.B. für eine Ablage oder eine Orgaschiene oder dergleichen.

Gemäß einer Weiterbildung kann das Formteil in dem Arbeitshub aus den Faserverbundmatten konturgestanzt und in Form gepresst werden.

Es wird somit ein Konturschnitt für das Formteil aus den Faserverbundmatten ausgestanzt und gleichzeitig in Form gepresst. Beispielsweise kann das Formwerkzeug eine Matrize und eine Patrize umfassen, welche jeweils eine komplementäre Wirkoberfläche aufweisen, die im Zusammenspiel bei dem Pressen die Kontur und die Form des Formteils vorgeben. In einem konkreten Beispiel kann eine Presse als Formwerkzeug eine konvexe Matrize und eine dazu komplementäre konkave Patrize aufweisen, die im Zusammenspiel eine Negativform der gewünschten Endform bilden.

Das Formteil kann von der Presse in dem einen Arbeitshub aus den Faserverbundmatten konturgestanzt und gleichzeitig in Form gepresst werden. Für die Konturzeichnung können die Matrize und die Patrize beispielsweise unterschiedliche stegartige Erhöhungen bzw. Wölbungen aufweisen. Mit derartigen Strukturen lassen sich zudem Vertiefungen, Falze und ähnliche funktionale Aspekte in der Struktur des Formteils erzeugen.

In diesem Fall kann ein nachträgliches Ausschneiden aus dem Faserverbundmaterial entlang der Kontur entfallen, d.h. das Formteil kann in dem einen Arbeitshub gepresst, geformt, konturgestanzt und konturgeschnitten werden. Das kann beispielsweise durch einen oder mehrere umlaufende Konturstege bzw. Quetschkanten in dem Formwerkzeug erreicht werden, die das Material so weit verdichten, dass es während des Pressvorgangs entlang der Kontur abreißt bzw. abgetrennt wird. Dadurch kann sich eine Nachbearbeitung auf eine Entfernung eines Grates beschränken.

Prinzipiell kann die Kontur jedoch alternativ ebenso zunächst lediglich in das Fasermaterial eingestanzt werden, ohne dass dieses vollständig entlang der Kontur abgetrennt wird. Das Formteil kann in diesem Fall im Anschluss an den Pressvorgang aus der Kontur ausgeschnitten werden.

Gemäß einer Weiterbildung können die Faserverbundmatten derart gemeinsam bei dem Verpressen gebogen werden, dass ein gekrümmter Raumteiler geformt wird.

Insbesondere können derart auch beidseitige Radien an einem Bauteil inklusive Konturschnitt in einem Arbeitshub erzeugt werden, d.h. die Faserverbundmatten können bei dem Pressen beidseitig weg von einer Flächenausdehnung der Faserverbundmatten gebogen werden. Damit sind insbesondere unterschiedlich gekrümmte Bauteile aus einem Stück herstellbar. Hierbei können auch Rundungen und/oder Kanten unter Verwendung desselben Verfahrensschrittes hergestellt bzw. bearbeitet werden.

Gemäß einer Weiterbildung können mehrere Hohlräume und entsprechende Montageelemente zwischen die beiden Faserverbundmatten eingebracht werden.

Es können somit mehrere Befestigungs- und/oder Montagepunkte für die Montage des Raumteilers an einer Struktur bereitgestellt werden. Beispielsweise kann ein Raumteiler drei Hohlräume und drei zugehörige Montageelemente aufweisen.

Gemäß einer Weiterbildung kann während des Arbeitshubs ein Einlageteil als Versteifung und/oder als Montagestruktur mit den Faserverbundmatten verpresst werden.

Beispielsweise kann ein Kunststoffbauteil in das verflüssigte oder zumindest weiche Plastikmaterial der Faserverbundmatten eingepresst werden. Nach Abkühlung und Aushärtung kann eine stoffschlüssige Verbindung zwischen den Komponenten verbleiben. In einem konkreten Beispiel kann ein Kunststoffbauteil mit dem Vliesmaterial verpresst werden, um dieses bereichsweise zu verstärken. In einem anderen konkreten Beispiel kann ein Halter, eine Klammer, ein Verbindungsstück oder dergleichen fest mit dem Formteil verbunden werden.

Gemäß einer Weiterbildung kann während des Arbeitshubs in dem Formteil eine Versteifungsstruktur zur Versteifung des Raumteilers ausgeformt werden.

Beispielsweise können durch geeignete Verdichtung und Verformung der Faserverbundmatte(n) ein oder mehrere versteifende Bereiche in dem Formteil erzeugt werden. In einem konkreten Beispiel kann eine regelmäßige Struktur aus Versteifungsrippen oder dergleichen in das Formteil eingearbeitet werden, bei der Bereiche mit höherer Dichte des Fasermaterials auf Bereiche mit niedrigerer Dichte in regelmäßigen Abständen folgen. In einem anderen konkreten Beispiel können alleinstehende Strukturen mit höherer Dichte in besonders beanspruchte oder belastete Bereiche der Faserverbundstruktur eingearbeitet werden.

Entsprechend können bestimmte Bereiche des Formteils geeignet geformt und verstärkt bzw. verdichtet werden, um beispielsweise Anbindungsbereiche für die Montage von Komponenten und/oder für die Befestigung von Komponenten bereitzustellen.

Gemäß einer Weiterbildung kann das Raumteilersystem ferner ein Erweiterungselement umfassen, welches mit einer Haftoberfläche zur wiederholt lösbaren Befestigung des Erweiterungselements an dem Raumteiler ausgebildet ist.

In dieser Weiterbildung wird somit eine Art Baukastensystem bereitgestellt, bei welchem ein vorgefertigter Raumteiler um ein oder mehrere Teile einfach und schnell erweitert werden kann. Beispielsweise können an einer Tischtrennwand ein oder mehrere zusätzliche vertikale Seitenwände und/oder horizontale Ablageböden angebracht werden, um diese entsprechend zu den jeweiligen Gegebenheiten flexibel anpassen und/oder erweitern zu können.

Gemäß einer Weiterbildung kann die Haftoberfläche mit einem selbsthaftenden Mikroklett ausgebildet sein.

Zur Befestigung des Erweiterungselements an einem Raumteiler aus einem Vlies- und/oder Filzstoff kann es somit ausreichend sein, das Erweiterungselement einfach an der Haftoberfläche auf eine geeignete Gegenfläche des Raumteilers aufzudrücken. Anschließend kann das Erweiterungselement falls gewünscht einfach wieder abgezogen werden, z.B. wenn es nicht mehr benötigt wird und/oder um die Position bzw. Ausrichtung zu verändern.

Gemäß einer Weiterbildung kann das Erweiterungselement aus dem gleichen Material wie die Faserverbundmatten des Raumteilers gefertigt sein.

Damit kann das Raumteilersystem in seiner Gesamtheit einschließlich der Erweiterungselemente aus demselben Vliesstoff bzw. Filzstoff gebildet werden. Prinzipiell kann in diesem Fall aufgrund des verwendeten Vlies- bzw. Filzstoffes ein Erweiterungselement beispielsweise über einen Klettmechanismus an dem Raumteiler befestigt werden. Beispielsweise kann ein flächiges Element bereichsweise mit einem selbsthaftenden Mikroklett oder dergleichen versehen werden. Für die Montage kann das Element nun einfach auf einen dafür vorgesehenen Bereich des Raumteilers gedrückt werden, um dort haften zu bleiben. Derart lassen sich beispielsweise Raumteiler in besonders praktischer Weise um einzelne flächige Elemente ergänzen. Ebenso können Ablageflächen oder dergleichen in flexibler Weise (vorübergehend) befestigt werden.

Insbesondere können ein oder mehrere Erweiterungselemente gemeinsam mit dem Raumteiler in dem Arbeitshub des Formwerkzeugs aus demselben Faserverbundmaterial gestanzt und in Form gepresst werden. Dieselben Faserverbundmatten können somit als Ausgangsmaterial für den Raumteiler samt Erweiterungselementen dienen. Hierbei können die einzelnen Komponenten aus unterschiedlichen Bereichen der Faserverbundmatten konturgestanzt werden. Prinzipiell ist es hierzu ausreichend, wenn das Formwerkzeug einen Konturschnitt für die Komponenten in die Faserverbundmatten einstanzt. Anschließend können die Komponenten in einem separaten Verfahrensschritt aus den Faserverbundmatten entlang der vorgezeichneten Konturen ausgeschnitten werden. Nichtsdestotrotz können die Komponenten jedoch bereits während des Pressvorgangs ihre finale Form bzw. Gestalt erhalten.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Perspektivansicht eines Raumteilers von schräg vorne gemäß einer Ausführungsform der Erfindung;
- Fig. 2: eine schematische Perspektivansicht eines Raumteilers von schräg vorne gemäß einer weiteren Ausführungsform der Erfindung;
- Fig. 3: eine schematische Schnittansicht eines Formwerkzeugs, welches zur Herstellung der Raumteiler aus Fig. 1 und 2 verwendet wird;
- Fig. 4: eine schematische Explosionsansicht des Formwerkzeugs aus Fig. 3;
- Fig. 5: eine schematische Perspektivansicht des Formwerkzeugs aus Fig. 4;
- Fig. 6: eine schematische Perspektivansicht eines Raumteilersystems mit mehreren Raumteilern gemäß einer weiteren Ausführungsform der Erfindung;
- Fig. 7: eine schematische Draufsicht auf einen Tisch mit einem Raumteiler gemäß einer weiteren Ausführungsform der Erfindung; und
- Fig. 8: ein schematisches Ablaufdiagramm eines Verfahrens zur Herstellung der Raumteiler gemäß einer Ausführungsform der Erfindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

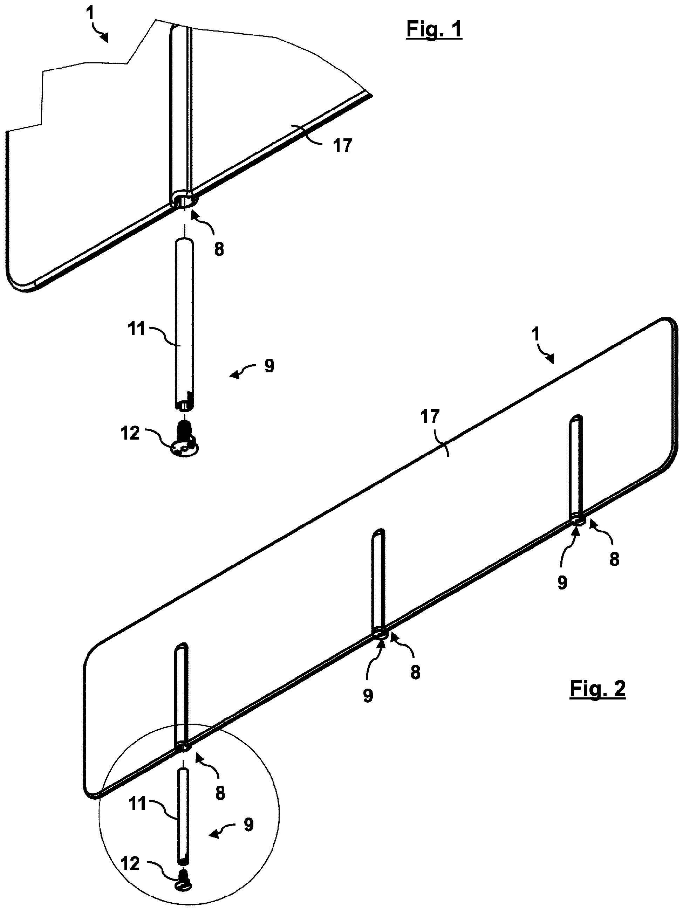

Figur 1 zeigt eine schematische Perspektivansicht eines Raumteilers 1 von schräg vorne gemäß einer Ausführungsform der Erfindung.

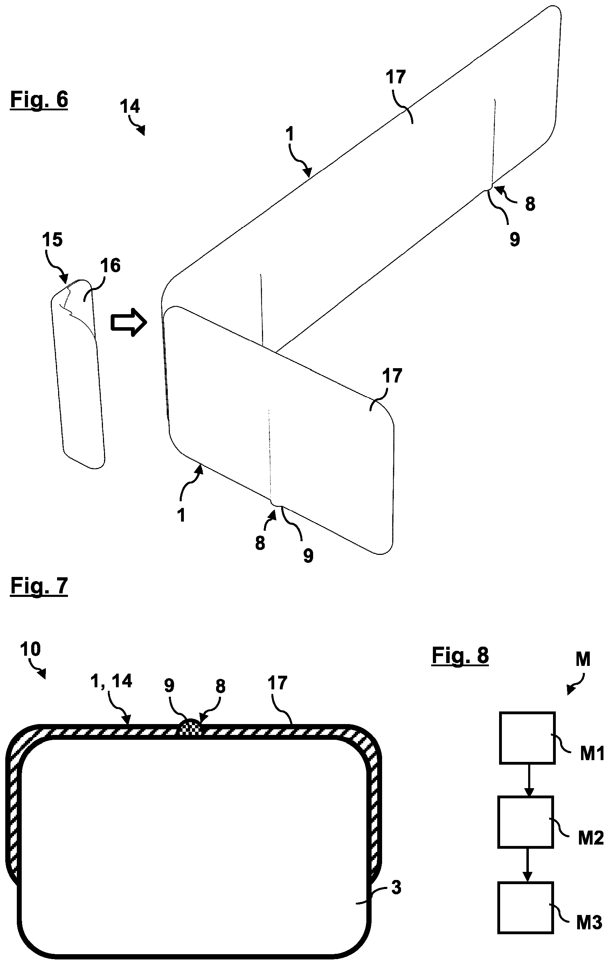

Der Raumteiler 1 umfasst ein Wandteil 17, welches als Sichtschutz dient. Der Raumteiler 1 kann hierbei eines von mehreren Teilelementen eines mehrteiligen Raumteilersystems 14 darstellen, wie es beispielsweise in Fig. 6 zu sehen ist. Insbesondere kann der Raumteiler 1 als Tischtrennwand ausgebildet sein und dabei an einer Tischplatte 3 eines Tisches 10 montiert sein, wie er beispielhaft in Fig. 7 von oben zu sehen ist. Das Raumteilersystem 14 umfasst in dem konkreten Ausführungsbeispiel der Fig. 6 dabei zwei plattenförmige Raumteiler 1 sowie ein zusätzliches Erweiterungselement 15, das jeweils über eine Haftoberfläche 16 an den Raumteilern 1 lösbar angebracht werden kann.

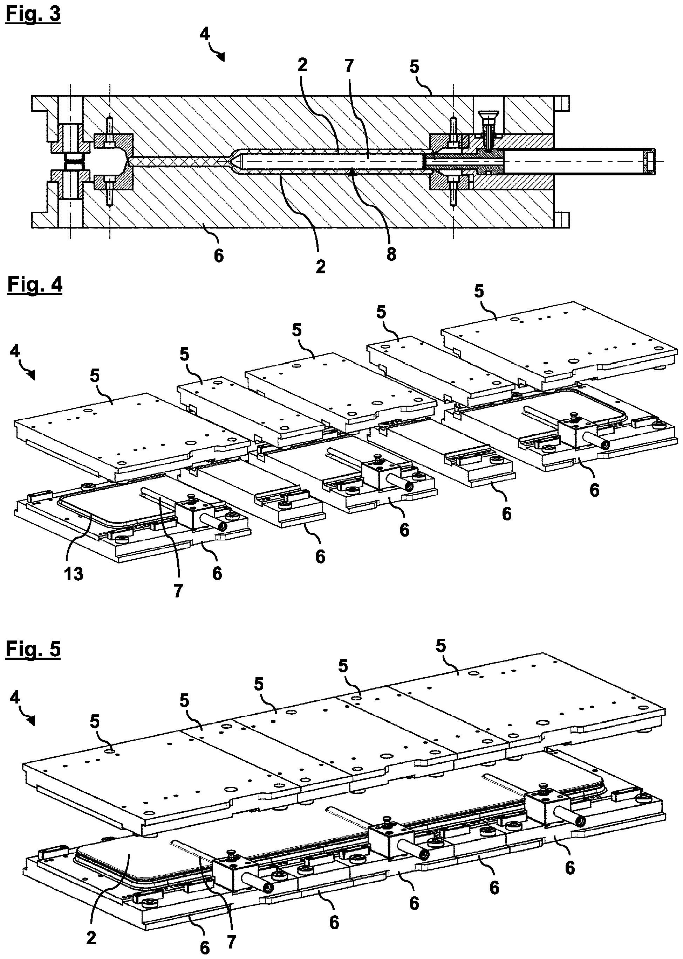

Das Wandteil 17 des Raumteilers 1 ist hierbei als Formvlies aus einem Vliesstoff bzw. Filzstoff ausgebildet und mit einem Verfahren hergestellt, wie es mit Bezug auf Fig. 3 bis 5 und 7 weiter unten erläutert wird. Ebenso sind die Erweiterungselemente 15 als Formvlies gefertigt, wobei dasselbe grundlegende Material wie für den Raumteiler 1 verwendet werden kann. In diesem Fall kann die Haftoberfläche beispielsweise mit einem selbsthaftenden Mikroklett oder dergleichen ausgebildet sein, um eine möglichst einfache und komfortable Montage und Demontage der Erweiterungselemente 15 an dem Raumteiler 1 zu ermöglichen.

Für die Befestigung des Raumteilers 1 an der Tischplatte 3 ist in einen Hohlraum 8 des Raumteilers 1 ein Montageelement 9 eingebracht, welches ein hohles Stabelement 11 und einen darin eingesteckten Adapter 12 umfasst. Der Adapter 12 kann zur Kopplung an ein Gegenelement der Tischplatte 3 und/oder eines Tischgestells ausgebildet sein. Um eine gewisse Flexibilität für die Anbindung an den Tisch 10 oder allgemein an ein Möbelstück zu ermöglichen, können unterschiedlich ausgebildete Adapter 12 verwendet werden, die jeweils in das Stabelement 11 einsteckbar sein können und unterschiedliche Montagepositionen und/oder -konfigurationen bereitstellen können.

Fig. 2 zeigt ein weiteres Ausführungsbeispiel für eine Raumteiler 1. Im Unterschied zu der Ausführung in Fig. 1 sind dort drei Montageelemente 9 in jeweils zugehörigen Hohlräumen 8 montiert. Entsprechend kann ein Raumteiler 1 in anderen Ausführungen mit zwei, vier oder mehr Montageelementen 9 versehen werden, je nachdem wie es die jeweilige Situation erfordert.

Es versteht sich hierbei, dass die in Fig. 1, 2, 6 und 7 gezeigten geometrischen Ausgestaltungen rein beispielhaft zu verstehen sind und Raumteiler 1 mit unterschiedlich geformten und mehr oder weniger gekrümmten Wandteilen 17 und Erweiterungselementen 15 ausgebildet werden können. Die Varianten in Fig. 1, 2 und 6 weisen rein beispielhaft rechteckige ebene Wandteile 17 auf. Das Erweiterungsteil 15 der Fig. 6 ist hierbei als Winkelelement mit zwei rechtwinklig zueinander ausgerichteten Flügelarmen ausgebildet, wobei jeder Arm jeweils eine Haftoberfläche 16 aufweist. Die beiden Raumteiler der Fig. 6 können somit über das Erweiterungsteil 15 miteinander verbunden werden, um den Sichtschutz beispielsweise in eine seitliche Richtung zu erweitern. Der Raumteiler 1 in Fig. 7 ist hingegen mit einem gekrümmten Wandteil 17 ausgebildet und weist zwei ebene Flügelbereiche auf, die rechtwinklig von einem zentralen ebenen Bereich abstehen. Damit bietet der Raumteiler 1 in Fig. 7 ebenfalls in seitliche Richtung einen gewissen Sichtschutz für den Tisch 10 (z.B. ein Schreibtisch), ist aber dabei in seiner Form festgelegt.

Ein entsprechendes Herstellungsverfahren M ist als Ablaufdiagramm schematisch in dargestellt. Ein hierbei vertwendetes Formwerkzeug 4 ist in verschiedenen Ansichten in Fig. 3 bis 5 zusehen.

Das Verfahren M umfasst dabei unter M1 Erhitzen zweier Faserverbundmatten 2 auf eine Umformtemperatur und unter M2 Verpressen der beiden erhitzten Faserverbundmatten 2 miteinander in einem einzelnen Arbeitshub eines Formwerkzeugs 4 zu einem flächigen Formteil entsprechend einer Gestalt des Raumteilers 1. Der Schritt des Erhitzens kann hierbei dem Pressvorgang vorgeschaltet durchgeführt werden, indem die Faserverbundmatten 2 beispielsweise in einen Schubladenofen eingelegt und auf oder über die Umformtemperatur aufgeheizt werden. Zuvor können die Faserverbundmatten 2 bereits zugeschnitten worden sein und ggf. durch Vernadeln oder anderweitig aneinander befestigt worden sein.

Der Ofen kann beispielsweise auf eine Temperatur von 180°C gebracht werden, was bei einer Schmelztemperatur des Kunststoffs von 130° eine oder mehrere Minuten Zeit für den Press- und Umformprozess lässt, bevor die Schmelztemperatur wieder unterschritten wird und das Bauteil aushärtet und damit nicht weiter verformbar ist. Durch das Erhitzen kann das Vliesmaterial einen Volumenschrumpf von einigen Prozent erfahren, was in der Formgebung zu berücksichtigen ist. Der formgebende Vorgang in dem Formwerkzeug 4 kann dann mehrere Minuten dauern. Im Anschluss kann das Formteil entnommen werden. Alternativ oder zusätzlich ist es denkbar, das Formwerkzeug 4 zu erhitzen, um den Umformprozess zu unterstützten oder überhaupt erst zu ermöglichen.

Bei dem Verpressen werden ein oder mehrere zylinderförmige Hohlräume 8 zwischen den beiden Faserverbundmatten 2 ausgeformt, indem dornförmige Formkerne 7 zwischen die beiden Faserverbundmatten 2 eingelegt und nach dem Verpressen wieder herausgezogen werden. Ein solcher Formkern 7 kann beispielsweise aus Metall bestehen und in dem Formwerkzeug 4 eingespannt sein (vgl. Fig. 3 bis 5).

In Fig. 3 ist hierzu ein Schnitt durch das geschlossene Formwerkzeug 4 für das Pressen des Raumteilers 1 zu sehen. Dabei ist auf der linken Seite eine Anordnung für das Pressen von beidseitigen Radien (für die Fertigung eines gekrümmten Wandteils 17), rechts für das Pressen eines Hohlraums 8 für die Aufnahme des Stabelements 11 zu sehen.

Anschließend umfasst das Verfahren M unter M3 Befestigen eines Montageelements 9 pro Hohlraum 8 zur Montage des Raumteilers 1, wobei ein hohles Stabelement 11 des Montageelements 9 in den jeweiligen Hohlraum 8 eingepresst wird. Anschließend kann ein Adapter 12 in eine Öffnung des Stabelements 11 eingesteckt werden.

Wie bereits weiter oben erwähnt wurde, handelt es sich bei den Faserverbundmatten 2 um einstückige Faservliesmatten, d.h. um flexible textile Flächengebilde aus wirren und unregelmäßig verschlungenen, d.h. ungeordneten, Fasern. Hierbei kann es sich insbesondere um Filzmatten handeln. Als Fasern kommen in dieser konkreten Anwendung sowohl einfache Fasern aus PET, als auch Bikomponentenfasern zum Einsatz, die jeweils einen Polyesterkern aufweisen, der von einem Mantel aus einem niedrigschmelzenden Polymer umschlossen ist.

Es versteht sich hierbei, dass in anderen Ausführungen ebenso andere Fasertypen zum Einsatz kommen können. Dabei können Fasern mit unterschiedlichen Kunststoffzusammensetzungen ebenso eingesetzt werden wie Fasern aus tierischen (z.B. Wolle), pflanzlichen (z.B. Kokos, Hanf usw.) oder anderen Materialien (Glas, Kohlenstoff etc.). Dabei können die jeweils verwendeten Fasern in einen Kunststoff oder ein anderes Matrixmaterial eingebettet sein und/oder von diesem gebunden werden.

In dem vorliegenden Beispiel umfassen die Bikomponentenfasern mantelseitig einen Kunststoffbestandteil, welcher eine Schmelztemperatur unterhalb der Umformtemperatur aufweist, z.B. 130°C. Aufgrund der Wärmebehandlung wird dieser Kunststoffbestandteil aufgeweicht bzw. verflüssigt und dadurch fließfähig. Der Kern der Bikomponentenfasern und die einfachen PET-Fasern können bei geeigneter Wahl der Umformtemperatur jedoch in ihrem festen Zustand verbleiben. Aufgrund des Anpressdrucks in dem Formwerkzeug 4 verteilt sich der geschmolzene Kunststoff in der Faserstruktur der Faserverbundmatten 2, was letztendlich zu einer mehr oder weniger starken Vernetzung innerhalb der Faserverbundmatten 2 führt. Hierbei verschmilzt der niedrigschmelzende Anteil der Bikomponentenfaser mit den einfachen PET-Fasern.

Für die Formgebung des Fasermaterials umfasst das Formwerkzeug 4 eine Presse, welche eine (konvexe) Matrize 5 und eine dazu komplementäre (konkave) Patrize 6 aufweist, die im Zusammenspiel eine Negativform der gewünschten Endform bilden. In der Ausführungsform der Fig. 4 und 5 ist das Formwerkzeug 4 modular gestaltet, indem die Anordnung samt Matrize 5 und Patrize 6 in mehrere Module unterteilt ist, die in unterschiedlicher Weise miteinander kombiniert werden können, um unterschiedlich große Wandteile 17 und/oder unterschiedliche Montagekonfigurationen zu ermöglichen.

Das Formteil wird von dem Formwerkzeug 4 in dem einen Arbeitshub aus den Faserverbundmatten 2 konturgestanzt und gleichzeitig in Form gepresst. Für die Konturzeichnung umfassen Matrize 5 und Patrize 6 unterschiedliche stegartige Erhöhungen bzw. Wölbungen. Mit derartigen Strukturen lassen sich zudem Vertiefungen, Falze und ähnliche funktionale Aspekte in der Struktur des Formteils erzeugen. Beispielhaft ist in Fig. 4 ein umlaufender Kontursteg 13 eingezeichnet. Sofern dies nicht bereits während des Pressvorgangs geschieht, kann das Formteil direkt im Anschluss an den Pressvorgang mit einem geeigneten Verfahren entlang seiner Kontur ausgeschnitten werden, wobei überschüssiges Material der Faserverbundmatten 2 entfernt wird.

Während des Arbeitshubs können in dem Formteil prinzipiell auch Versteifungsstrukturen zur Versteifung des Raumteilers 1 ausgeformt werden und/oder Einlageteile, z.B. aus Kunststoff, als Versteifung mit eingepresst werden.

Im Ergebnis wird somit ein Raumteiler 1 samt Erweiterungselementen 15 als Formvlies aus einem Vlies- und/oder Filzstoff gefertigt, wobei die Hohlräume zur Befestigung von Montageelementen 9 direkt mit ausgeformt werden. Die Erweiterungselemente 15 können vorteilhafterweise ebenfalls aus diesem Fasermaterial im Zuge desselben Fertigungsschritts gefertigt werden. Zudem können Versteifungsstrukturen und/oder Montagestrukturen direkt mit in die Faserstruktur des Raumteilers 1 hineingeformt werden. Einlageteile aus Kunststoff können den Raumteiler 1 strukturell und funktional ergänzen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich aus-schlie-βen.

### Bezugszeichenliste

- 1: Raumteiler
- 2: Faserverbundmatte
- 3: Tischplatte
- 4: Formwerkzeug
- 5: Matrize
- 6: Patrize
- 7: Formkern
- 8: Hohlraum
- 9: Montageelement
- 10: Tisch
- 11: Stabelement
- 12: Adapter
- 13: Kontursteg
- 14: Raumteilersystem
- 15: Erweiterungselement
- 16: Haftoberfläche
- 17: Wandteil
- M: Verfahren
- M1-M3: Verfahrensschritte

## Patentansprüche

1. Verfahren (M) zur Herstellung eines Raumteilers (1) aus Faserverbundmatten (2), umfassend:
Erhitzen (M1) zweier Faserverbundmatten (2) auf eine Umformtemperatur,
Verpressen (M2) der beiden erhitzten Faserverbundmatten (2) miteinander in einem einzelnen Arbeitshub eines Formwerkzeugs (4) zu einem flächigen Formteil entsprechend einer Gestalt des Raumteilers (1), wobei ein Hohlraum (8) zwischen den beiden Faserverbundmatten (2) ausgeformt wird, indem ein Formkern (7) zwischen die beiden Faserverbundmatten (2) eingelegt wird und nach dem Verpressen wieder herausgezogen wird, und
Befestigen (M3) eines Montageelements (9) in dem Hohlraum (8) zur Montage des Raumteilers (1),
wobei die Faserverbundmatten (2) jeweils als ein einstückiges flexibles textiles Flächengebilde mit einem Kunststoffbestandteil ausgebildet sind, welcher eine Schmelztemperatur unterhalb der Umformtemperatur aufweist.

2. Verfahren nach Anspruch 1,
**dadurch gekennzeichnet,**
**dass** das Formteil in dem Arbeitshub aus den Faserverbundmatten (2) konturgestanzt und in Form gepresst wird.

3. Verfahren nach einem der vorherigen Ansprüche,
**dadurch gekennzeichnet,**
**dass** die Faserverbundmatten (2) jeweils einen Vliesstoff und/oder einen Filzstoff aufweisen.

4. Verfahren nach einem der vorherigen Ansprüche,
**dadurch gekennzeichnet,**
**dass** die Faserverbundmatten (2) jeweils PET-basierte Fasern umfassen.

5. Verfahren nach einem der vorherigen Ansprüche,
**dadurch gekennzeichnet,**
**dass** die Faserverbundmatten (2) jeweils Bikompomonentenfasern umfassen, welche einen Polyesterkern aufweisen, der von einem Polymermantel mit einer Schmelztemperatur unterhalb der Umformtemperatur umgeben ist.

6. Verfahren nach einem der vorherigen Ansprüche,
**dadurch gekennzeichnet,**
**dass** die beiden Faserverbundmatten (2) vor dem Verpressen miteinander vernadelt werden.

7. Verfahren nach einem der vorherigen Ansprüche,
**dadurch gekennzeichnet,**
**dass** ein Dorn als Formkern (7) zur Formung eines zylinderförmigen Hohlraums (8) verwendet wird, wobei das Montageelement (9) ein Stabelement (11) zur Befestigung in dem Hohlraum (8) umfasst.

8. Verfahren nach einem der vorherigen Ansprüche,
**dadurch gekennzeichnet,**
**dass** das Montageelement (9) einen lösbaren Adapter (12) aufweist, der eine zugehörige Montageposition des Raumteilers (1) bereitstellt,wobei vorzugsweise der Adapter (12) verstellbar zur Bereitstellung unterschiedlicher Montagepositionen des Raumteilers (1) ausgebildet ist.

9. Verfahren nach einem der vorherigen Ansprüche,
**dadurch gekennzeichnet,**
**dass** die Faserverbundmatten (2) derart gemeinsam bei dem Verpressen gebogen werden, dass ein gekrümmter Raumteiler (1) geformt wird.

10. Verfahren nach einem der vorherigen Ansprüche,
**dadurch gekennzeichnet,**
**dass** mehrere Hohlräume (8) und entsprechende Montageelemente (9) zwischen die beiden Faserverbundmatten (2) eingebracht werden.

11. Verfahren nach einem der vorherigen Ansprüche,
**dadurch gekennzeichnet,**
**dass** während des Arbeitshubs ein Einlageteil als Versteifung mit den Faserverbundmatten (2) verpresst wird
und/oder dass während des Arbeitshubs in dem Formteil eine Versteifungsstruktur zur Versteifung des Raumteilers (1) ausgeformt wird.

12. Raumteilersystem (14) mit einem Raumteiler (1), welcher mit einem Verfahren (M) nach einem der Ansprüche 1 bis 11 hergestellt ist.

13. Raumteilersystem nach Anspruch 12,
**dadurch gekennzeichnet,**
**dass** ein Erweiterungselement (15) vorhanden ist, welches mit einer Haftoberfläche (16) zur wiederholt lösbaren Befestigung des Erweiterungselements (15) an dem Raumteiler (1) ausgebildet ist.

14. Raumteilersystem nach Anspruch 13,
**dadurch gekennzeichnet,**
**dass** die Haftoberfläche (16) mit einem selbsthaftenden Mikroklett ausgebildet ist und/oder
**dass** das Erweiterungselement (15) aus dem gleichen Material wie die Faserverbundmatten (2) des Raumteilers (1) gefertigt ist.

15. Tisch (10) mit einer Tischplatte (3) und einem Raumteilersystem (14) nach einem der Ansprüche 12 bis 14, wobei der Raumteiler (1) als Tischtrennwand ausgebildet und über zumindest ein Montageelement (9) an der Tischplatte (3) montiert ist.

## Claims

1. Method (M) for manufacturing a space divider (1) from fibre composite mats (2), comprising:
heating (M1) two fibre composite mats (2) to a shaping temperature,
compressing (M2) the two heated fibre composite mats (2) into one another in a single operating pass of a shaping tool (4) to form a planar shaped part in accordance with a shape of the space divider (1), a cavity (8) being formed between the two fibre composite mats (2) by laying a mould core (7) between the two fibre composite mats (2) and withdrawing it again after the compression, and
fixing (M3) a mounting element (9) in the cavity (8) for mounting the space divider (1),
the fibre composite mats (2) each being formed as a single-piece flexible textile fabric having a plastics material component having a melting point below the shaping temperature.

2. Method according to claim 1,
**characterised**
**in that** the shaped part is contour-punched from the fibre composite mat (2) and pressed into shape in the operating pass.

3. Method according to either of the preceding claims,
**characterised**
**in that** the fibre composite mats (2) each comprise a nonwoven and/or a felt.

4. Method according to any of the preceding claims,
**characterised**
**in that** the fibre composite mats (2) each comprise PET-based fibres.

5. Method according to any of the preceding claims,
**characterised**
**in that** the fibre composite mats (2) each comprise bicomponent fibres having a polyester core which is enclosed by a polymer casing having a melting point below the shaping temperature.

6. Method according to any of the preceding claims,
**characterised**
**in that** the two fibre composite mats (2) are needled to one another before the compression.

7. Method according to any of the preceding claims,
**characterised**
**in that** a mandrel is used as a mould core (7) for shaping a cylindrical cavity (8), the mounting element (9) being a rod element (11) for fixing in the cavity (8).

8. Method according to any of the preceding claims,
**characterised**
**in that** the mounting element (9) has a detachable adapter (12) which provides an associated mounting position of the space divider (1), the adapter (12) preferably being formed adjustable for providing different mounting positions of the space divider (1).

9. Method according to any of the preceding claims,
**characterised**
**in that** the fibre composite mats (2) are bent together during the compression in such a way that a curved space divider (1) is formed.

10. Method according to any of the preceding claims,
**characterised**
**in that** a plurality of cavities (8) and corresponding mounting elements (9) are introduced between the two fibre composite mats (2).

11. Method according to any of the preceding claims,
**characterised**
**in that** during the operating pass an inlay part is compressed along with the fibre composite mats (2) as a reinforcement, and/or in that during the operating pass a reinforcement structure for reinforcing the space divider (1) is formed in the shaped part.

12. Space divider system (14) comprising a space divider (1) manufactured by a method (M) according to any of claims 1 to 11.

13. Space divider system according to claim 12,
**characterised**
**in that** an extension element (15) is provided and is formed with an adhesion surface (16) for fixing the extension element (15) to the space divider (1) in a repeatedly detachable manner.

14. Space divider system according to claim 13,
**characterised**
**in that** the adhesion surface (16) is formed with a self-adhesive micro hook-and-loop fastener and/or in that the extension element (15) is made from the same material as the fibre composite mats (2) of the space divider (1).

15. Table (10) comprising a table top (3) and a space divider system (14) according to any of claims 12 to 14, wherein the space divider (1) is formed as a table partition and mounted on the table top (3) via at least one mounting element (9).

## Revendications

1. Procédé (M) de fabrication d'un séparateur d'espace (1) à partir de mats composites fibreux (2), comprenant les étapes consistant à :
chauffer (M1) deux mats composites fibreux (2) à une température de formage,
presser (M2) les deux mats composites fibreux (2) chauffés l'un contre l'autre en une seule course de travail d'un outil de formage (4) pour obtenir une pièce moulée plane correspondant à une forme du séparateur d'espace (1), une cavité (8) étant formée entre les deux mats composites fibreux (2) en insérant un noyau de moulage (7) entre les deux mats composites fibreux (2) et en le retirant après le pressage, et
fixer (M3) un élément de montage (9) dans la cavité (8) pour le montage du séparateur d'espace (1),
les mats composites fibreux (2) étant chacun conçus comme une structure textile plane flexible d'une seule pièce avec un constituant en matière plastique qui présente une température de fusion inférieure à la température de formage.

2. Procédé selon la revendication 1,
**caractérisé en ce**
**que** la pièce moulée est découpée en contour dans la course de travail à partir des mats composites fibreux (2) et est pressée en forme.

3. Procédé selon l'une des revendications précédentes,
**caractérisé en ce**
**que** les mats composites fibreux (2) présentent chacun un tissu non tissé et/ou un tissu feutré.

4. Procédé selon l'une des revendications précédentes,
**caractérisé en ce**
**que** les mats composites fibreux (2) comprennent chacun des fibres à base de PET.

5. Procédé selon l'une des revendications précédentes,
**caractérisé en ce**
**que** les mats composites fibreux (2) comprennent chacun des fibres bicomposantes présentant un noyau en polyester entourée d'une gaine en polymère ayant une température de fusion inférieure à la température de formage.

6. Procédé selon l'une des revendications précédentes,
**caractérisé en ce**
**que** les deux mats composites fibreux (2) sont aiguilletés l'un à l'autre avant le pressage.

7. Procédé selon l'une des revendications précédentes,
**caractérisé en ce**
**qu'**un mandrin est utilisé comme noyau de moulage (7) pour former une cavité cylindrique (8), l'élément de montage (9) comprenant un élément en forme de tige (11) pour la fixation dans la cavité (8).

8. Procédé selon l'une des revendications précédentes,
**caractérisé en ce**
**que** l'élément de montage (9) présente un adaptateur amovible (12) qui fournit une position de montage associée du séparateur d'espace (1), l'adaptateur (12) étant de préférence conçu réglable pour fournir différentes positions de montage du séparateur d'espace (1).

9. Procédé selon l'une des revendications précédentes,
**caractérisé en ce**
**que** les mats composites fibreux (2) sont pliés ensemble lors du pressage de telle sorte qu'un séparateur d'espace incurvé (1) est formé.

10. Procédé selon l'une des revendications précédentes,
**caractérisé en ce**
**que** plusieurs cavités (8) et éléments de montage correspondants (9) sont introduits entre les deux mats composites fibreux (2).

11. Procédé selon l'une des revendications précédentes,
**caractérisé en ce**
**que** pendant la course de travail, une pièce d'insertion est pressée avec les mats composites fibreux (2) en tant que renforcement et/ou
**que** pendant la course de travail, une structure de renforcement est formée dans la pièce moulée pour renforcer le séparateur d'espace (1).

12. Système de séparation d'espace (14) avec un séparateur d'espace (1) qui est fabriqué par un procédé (M) selon l'une des revendications 1 à 11.

13. Système de séparation d'espace selon la revendication 12,
**caractérisé en ce**
**qu'**un élément d'extension (15) est présent, lequel est formé avec une surface adhésive (16) pour la fixation amovible répétée de l'élément d'extension (15) sur le séparateur d'espace (1).

14. Système de séparation d'espace selon la revendication 13,
**caractérisé en ce**
**que** la surface adhésive (16) est réalisée avec un micro-crochet auto-agrippant et/ou
**que** l'élément d'extension (15) est fabriqué à partir du même matériau que les mats composites fibreux (2) du séparateur d'espace (1).

15. Table (10) dotée d'un plateau de table (3) et d'un système de séparation d'espace (14) selon l'une des revendications 12 à 14, le séparateur d'espace (1) étant conçu comme une cloison de séparation de table et étant monté sur le plateau de table (3) par au moins un élément de montage (9).
